# EUROPEAN PATENT APPLICATION

(11) **EP 2 725 785 A2**
(43) Date of publication of application: **30.04.2014**
(21) Application number: 13165966.6
(22) Date of filing: 30.04.2013
(51) Int. Cl.: H04N 5/76, H04N 21/433

(54) **Broadcast receiving apparatus for providing a time shift function and method thereof**

(30) Priority: 25.10.2012 KR 20120119127
(71) Applicant: Samsung Electronics Co., Ltd, Gyeonggi-do 443-742 (KR)
(72) Inventor: Lee, Su-myoung, Gyeonggi-do (KR)
(74) Representative: Venner Shipley LLP

(57) **Abstract**

A broadcast receiving apparatus which provides a time shift function and a method thereof are provided. The broadcast receiving apparatus includes a receiver which receives a broadcast signal, a signal processor which processes the broadcast signal to output broadcast data, a storage which includes a minimum storage area allocated to a time shift function and a recording area allocated to a recording function, and a controller which, in response to the time shift function being executed, sequentially stores broadcast data from the minimum storage area and, in response to the minimum storage area being filled, additionally designates a time shift area up to the recording area to store the broadcast data.

## Description

The present invention relates to a broadcast receiving apparatus which provides a time shift function and a method thereof. Specifically, the present invention relates to a broadcast receiving apparatus which efficiently manages a storage space used for a time shift, and a method thereof.

A recently supplied broadcast receiving apparatus provides a time shift function of storing and playing real-time broadcast data (e.g., data storing an image, a voice, and content information).

In response to the time shift function being used, a user may return to an arbitrary past time according to a user request during viewing of a real-time broadcast. Also, the user may pause the real-time broadcast, and replay and view the real-time broadcast after an arbitrary time elapses.

For example, in response to the user missing a screen showing the scoring of a goal during viewing of a football game, the user may rewind the football game to a position that is 5 minutes before the current time. In response to the user temporarily leaving a TV when an important scene appears, the user may pause a broadcast that the user is currently viewing and may re-input a play command in order to view the broadcast.

A broadcast receiving apparatus includes a storage device which stores broadcast data in order to provide the time shift function to the user. In addition to storing the broadcast data, the storage device may be used to store recordings.

Since the storage device may not store an unlimited amount of broadcast data due to the available capacity thereof, a method of efficiently managing a storage space is required.

A part of the storage device is secured as an area which provides the time shift function, and another part of the storage device stores a recording in progress.

However, in response to the part being secured to provide the time shift function, the part may not be used to perform general recording and reservation recording although an available capacity remains. Therefore, the storage space may not be efficiently used.

For example, in response to 30 GB of a storage device having a storage capacity of 100 GB being set to provide a space for storing a time shift, and 70 GB of the storage device being set to provide a space for general recording, although the space of 30 GB for the time shift remains, the space of 30 GB may not be used as a space for general recording. Therefore, a storage space may not be efficiently used.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a broadcast receiving apparatus which adjusts a memory capacity used for a time shift function in order to efficiently manage the memory capacity, and a method thereof.

According to an aspect of the exemplary embodiments, there is provided a broadcast receiving apparatus including a receiver which receives a broadcast signal, a signal processor which processes the received broadcast signal to output broadcast data, a storage which, in response to a time shift function being executed, stores the broadcast data, and a controller which, in response to a size of a time shift capacity used for the time shift function exceeding a preset minimum storage capacity, performs the time shift function by using an additional storage capacity as additional time shift capacity and, in response to a recording function being selected, fixes a size of the time shift capacity according to a residual capacity of the storage and a size of a content to be recorded.

In response to the recording function being selected, the controller may compare the size of the content to be recorded with a size of the residual capacity of the storage, in response to the size of the content being greater than the size of the residual capacity, locally deleting broadcast data stored by the time shift function in order to secure a recording area in which the content is to be recorded, and in response to the size of the content being smaller than the size of the residual capacity, fix a residual storage capacity except for a storage capacity which corresponds to the size of the residual capacity or to the content, as the time shift capacity.

If the time shift capacity is filled when the time shift function is executed, the controller may execute a recycling operation of deleting the broadcast data stored by the time shift function and storing new broadcast data in a space from which the broadcast data is deleted. In response to the size of the content to be recorded being greater than the size of the residual capacity, the controller may locally delete the broadcast data stored by the time shift function in a unit of a preset time or in a unit of a broadcast program. In response to the recording area being smaller than the size of the content to be recorded when the recording area is secured up to a residual storage capacity, except for the minimum storage capacity, the controller may stop the recording function.

According to another aspect of the exemplary embodiments, there is provided a method of executing a time shift function. The method may include receiving a broadcast signal, processing the broadcast signal to output broadcast data, in response to the time shift function being executed, storing the broadcast data, in response to a size of a time shift capacity used for the time shift function exceeding a preset minimum storage capacity, performing the time shift function by using an additional storage capacity as the time shift capacity, and in response to a recording function being selected, adjusting a size of the time shift capacity according a residual capacity of a storage and a size of a content to be recorded.

The method may further include, in response to the recording function being executed, comparing the size of the content with a size of a residual capacity of a recording area, in response to the size of the content being greater than the residual capacity, locally deleting broadcast data stored by the time shift function to secure the recording area in which the content is to be recorded, and in response to the size of the content being smaller than the residual capacity, determining a residual storage capacity except a storage capacity which corresponds to the residual capacity or the size of the content, as the time shift capacity.

The method may further include, in response to the time shift capacity being filled when the time shift function is executed, performing a recycling operation of deleting the broadcast data stored by the time shift function and storing new broadcast data in a space from which the broadcast data is deleted. The securing of the recording area in which the content is to be recorded may include locally deleting the broadcast data stored by the time shift function in a unit of a preset time or in a unit of a broadcast program. The method may further include, in response to the recording area is smaller than the size of the content when the recording area being secured up to a residual storage capacity except the minimum storage capacity, stopping the recording function.

An exemplary embodiment may further provide a broadcast receiving apparatus including a signal processor which processes a broadcast signal and outputs broadcast data, and a controller which performs a time shift function by using an additional storage capacity as the time shift capacity when a size of a time shift capacity exceeds a preset minimum storage capacity. The controller may fix a size of the time shift capacity according to a residual storage capacity of the storage and a size of a broadcast content to be recorded.

The controller may execute a recycling operation of deleting broadcast data stored by the time shift function and storing new broadcast data in a space from which the broadcast data is deleted when the time shift capacity is filled while the time shift function is executed.

In addition, the controller may locally delete the broadcast data stored by the time shift function in a unit of preset time or in a unit of broadcast program when the size of the content to be recorded is greater than the size of the residual capacity.

As described above, according to various exemplary embodiments, a storage space of a broadcast receiving apparatus may be efficiently used. Also, since a storage capacity used for a time shift is not pre-secured, the broadcast receiving apparatus may flexibly cope with several recording operations simultaneously performed.

The above and/or other aspects will be more apparent by describing certain exemplary embodiments with reference to the accompanying drawings, in which:
FIG. 1 is a block diagram which illustrates a broadcast receiving apparatus according to an exemplary embodiment;
FIG. 2 is a view which illustrates a method of storing real-time broadcast data used for a time shift according to an exemplary embodiment;
FIG. 3 is a view which illustrates a method of securing a recording area according to an exemplary embodiment;
FIG. 4 is a view which illustrates a method of securing a recording area according to another exemplary embodiment of the present general inventive concept;
FIG. 5 is a view which illustrates a method of securing a storage space in response to a residual capacity lacking sufficient storage space, according to an exemplary embodiment;
FIG. 6 is a view which illustrates a method of securing a storage space according to another exemplary embodiment;
FIG. 7 is a view which illustrates a stoppage of a recording function due to a lack of an available storage space, according to an exemplary embodiment;
FIG. 8 is a flowchart which illustrates a method of enabling a time shift function and storing real-time broadcast data according to an exemplary embodiment; and
FIG. 9 is a flowchart which illustrates a method of securing a storage space to store contents in response to a recording command being input when a time shift function is enabled, according to an exemplary embodiment.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

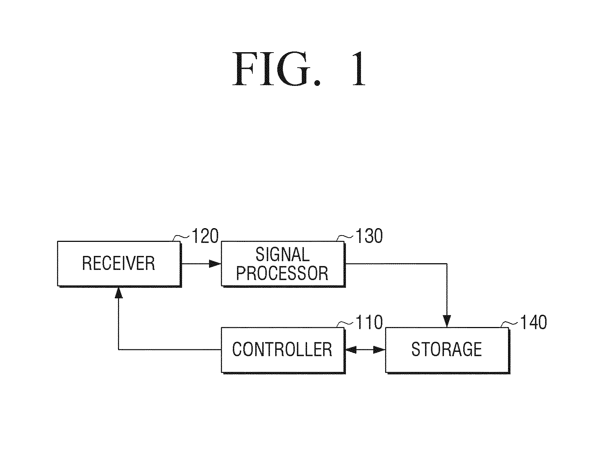

FIG. 1 is a block diagram which illustrates a broadcast receiving apparatus 100 according to an exemplary embodiment. The broadcast receiving apparatus 100 may be implemented as various types of electronic devices having a storage means like a TV, a portable multimedia player (PMP), a personal digital assistant (PDA), a laptop personal computer (PC), a PC, a personal video recorder (PVR), an MP3 layer, or the like.

Referring to FIG. 1, the broadcast receiving apparatus 100 includes a controller 110, a receiver 120, a signal processor 130, and a storage 140.

The receiver 120 receives contents from a broadcasting station which transmits a broadcast program content or receives contents through a web server by using a broadcast network. The receiver 120 may be implemented as various types of devices. For example, in response to the receiver 120 receiving a broadcast content from the broadcasting station, the receiver 120 may include a demodulator (not shown), an equalizer (not shown), etc. In response to the receiver 120 receiving a broadcast content from a source such as the web server, the receiver 120 may be implemented as a network interface card (not shown).

The signal processor 130 processes data received from the receiver 120 to perform signal processing with respect to broadcast data, in order to output an image frame.

In particular, the signal processor 130 may include various types of elements such as a demultiplexer, a video decoder, an audio decoder, a data decoder, a scaler, a frame rate adjuster, an audio amplifier, and so on. Here, the demultiplexer detects video data, audio data, additional data, etc., from the broadcast data, and the video decoder decodes the detected video data, audio data and additional data. Also, the scaler generates a video frame by using the video data processed by the video decoder, the frame rate adjuster adjusts a frame rate and the audio amplifier amplifies the decoded audio data.

Therefore, the signal processor 130 performs operations, such as decoding, scaling, and frame rate converting, with respect to the broadcast data in order to generate a video frame which may be output from a display (not shown) of the broadcast receiving apparatus 100. The signal processor 130 also performs processing, such as decoding or the like, with respect to an audio signal included in the broadcast data in order to convert the broadcast data into an audio signal which may be output from an audio output part (not shown) of the broadcast receiving apparatus 100.

The storage 140 stores the broadcast data and a recording received through the receiver 120. The storage 140 may be an internal memory such as a hard disk drive (HDD) or an external memory such as a memory stick, a memory card, or the like.

The controller 110 controls an overall operation of the broadcast receiving apparatus 100 according to a user command. In particular, the controller 110 may perform a time shift function or a recording function. The time shift function refers to a function of storing a broadcast program in real time to perform rewinding, pausing, playing according to a user selection. The recording function refers to a function of designating and storing a particular program. Various types of data may be stored in the storage 140 due to the time shift function or the recording function.

The controller 110 variably adjusts a part of a storage capacity of the storage 140 used for the time shift function , i.e., a size of a time shift capacity, to support the time shift function and the recording function in order to efficiently use the time shift function and the recording function.

Since a conventional broadcast receiving apparatus pre-divides a memory capacity into a time shift space and a recording space, and uses the time shift space and the recording space as pre-divided, the memory capacity may not be efficiently used. In other words, since a storage capacity used for a time shift function is fixed, a time which may be recovered by a time shift is limited. In response to a storage capacity allocated to the time shift function being set to a capacity storing data having a size of about 20 minutes, a user rewinds and plays data before 20 minutes from a current time. Also, in response to a size of a content to be recorded being greater than a size of a recording space, recording may not be achieved in spite of a real unused capacity.

However, the controller 110 of the broadcast receiving apparatus 100 secures a minimum storage capacity of a whole capacity of the storage 140 having a preset size for the time shift function and uses a residual storage capacity for a necessary function of the time shift function and the recording function.

In particular, in response to the time shift function being executed, the controller 110 stores the broadcast data processed by the signal processor 130 in the storage 140. The minimum storage capacity of the whole capacity of the storage 140 is allocated to the time shift function. The minimum storage capacity may be determined in consideration of a minimum recovery time meriting use of the time shift function. For example, in response to a minimum time shift amount being determined as 5 minutes, a storage capacity storing data having a size for 5-minute playing may be set to a minimum storage capacity. The minimum storage capacity is set to be smaller than a storage capacity set to be used for a time shift function in a conventional broadcast receiving apparatus. Therefore, although a size of an entire storage capacity is equal to a size of a conventional entire storage capacity, a storage capacity usable for the recording function becomes greater.

In response to a capacity occupied by the broadcast data exceeding a preset minimum storage capacity, the controller 110 continuously performs the time shift function by using an additional storage capacity as a time shift capacity. Therefore, an amount of data which may be restored by a time shift may increase. For example, in response to the whole storage capacity of the storage 140 having enough size to store data of play quantity of about 60 minutes, and the recording function is not used, data less than 60 minutes may first be played by the time shift function.

In response to the recording function being selected, the controller 110 may determine (or confirm) a size of a time shift capacity according to a residual capacity of the storage 140 and a size of a content to be recorded. In response to a recording function of a 30-minute content being selected when a quantity of about 30 minutes is stored by the time shift function, the controller 110 determines a storage capacity used for the time shift function as a storage capacity of 30-minute size and uses a residual capacity for the recording function.

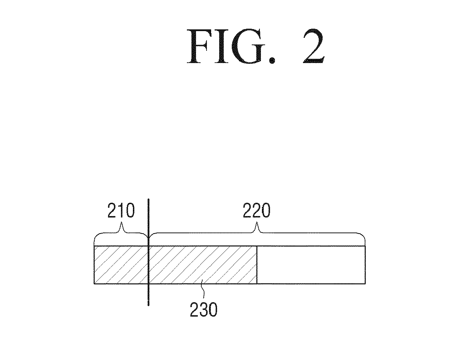

FIG. 2 is a view which illustrates a method of storing broadcast data when a time shift function is executed in a broadcast receiving apparatus, according to an exemplary embodiment.

In response to the time shift function being enabled, the controller 110 pre-determines a storage space necessary for the time shift function not to secure a time shift storage area but to set a minimum storage capacity which executes the time shift function. The minimum storage capacity is set to a default size to be stored in an internal memory of the storage 140 or the controller 110. Reference numeral 210 of FIG. 2 denotes a size of a minimum storage capacity.

In response to a time shift function being executed, the controller 110 sequentially uses storage areas of the storage 140 to store real-time broadcast data 230. Here, in response to a recording command not being input, and the real-time broadcast data 230 exceeds the minimum storage capacity, the controller 110 continuously stores the real-time broadcast data 230.

In other words, different from storage in a known broadcast receiving apparatus, a time shift storage area is not fixed and is variably adjusted by the controller 110. Therefore, storage space may be efficiently used. In response to a recording function not being used, and only the time shift function being continuously used, the controller 110 may use a whole storage area for the time shift function.

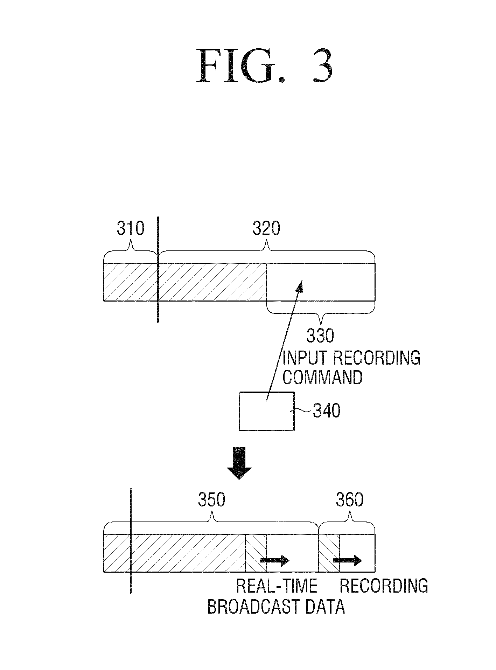

FIG. 3 is a view which illustrates a method of securing a recording area in response to a recording command being input, according to an exemplary embodiment.

A recently supplied smart TV provides a function of recording a program of a channel which is not currently viewed. For example, this may occur when a program on channel 9 is recorded while viewing a program on channel 7.

According to the exemplary embodiments, a recording area is not pre-secured in a storage space. Therefore, in response to a recording command being input when enabling a time shift, the recording area is to be secured according to a size of a content to be recorded.

As shown in FIG. 3, in response to a recording command being input when real-time broadcast data exceeds a minimum storage capacity and is stored due to a continuous execution of a time shift function, the controller 110 compares a size of a content 340 to be recorded with a size of a residual capacity 330

In response to a determination that the size of the residual capacity 330 is greater than the size of the content 340, the controller 110 allocates a storage space by the size of the content 340 as a recording area 360 and performs a time shift function in a residual storage space 350, except for the recording area 360.

Therefore, subsequently received broadcast data is recorded in a time shift area 350, and a broadcast content is recorded in the recording area 360. In response to the time shift area 350 being filled as time goes by, broadcast data which is of the longest time is deleted, and new broadcast data is overwritten. Therefore, broadcast data is stored, and the time shift function is continuously performed.

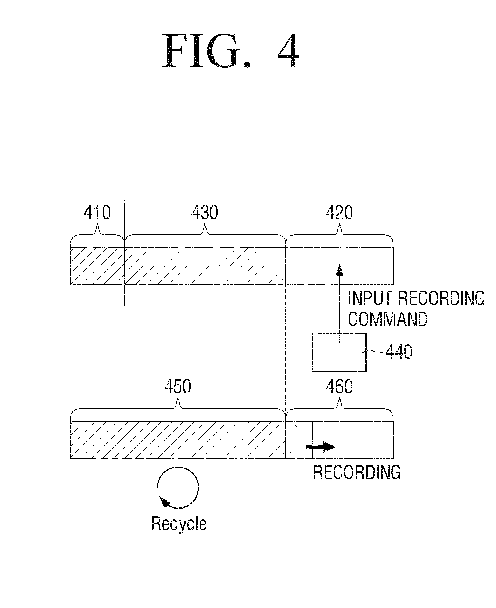

FIG. 4 is a view which illustrates a method of securing a recording area in response to a recording command being input when a time shift function is enabled, according to another exemplary embodiment.

In response to the time shift function being enabled (or activated), real-time broadcast data 430 is recorded in excess of a minimum storage capacity 410. Here, in response to a recording command with respect to a content 440 to be recorded being input, the controller 110 compares a capacity of the content 440 with a size of a residual capacity 420.

In response to a determination that the size of the residual capacity 420 is greater than the capacity of the content 440, a capacity by a size storing the real-time broadcast data 430 when the recording command is input, is allocated to a time shift area 450, and the residual capacity 420 is allocated to a recording area. In response to the time shift function being continuously executed, new broadcast data is overwritten on previously stored broadcast in the time shift area 450, and a content to be recorded is stored in a recording area 460 which is separate from the new broadcast data.

In response to a recording command with respect to a new content being input, the controller 110 compares a size of the residual capacity recording area 420 with a size of the new content. In response to the recording area 420 lacking according to the comparison result, the controller 110 locally deletes data recorded in the time shift area 450 to expand the size of the recording area 420 and records the new content in the expanded recording area 460.

An area allocated as the recording area 460 may be changed into a time shift area in which a user erases a content recorded in the recording area 460, and thus broadcast data is re-stored.

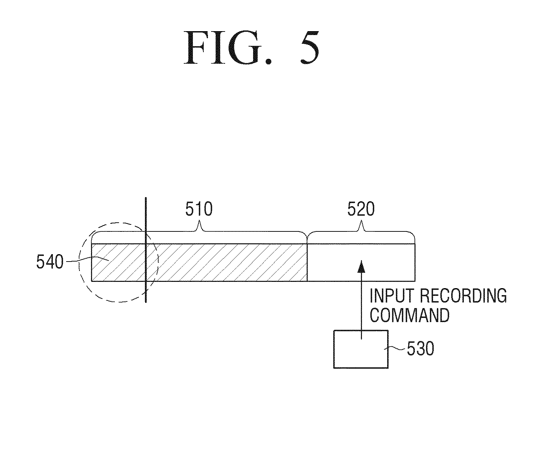

FIG. 5 is a view which illustrates a method of securing a storage space in response to a lack of a residual capacity, according to an exemplary embodiment.

According to this exemplary embodiment, a time shift area is not pre-secured. Therefore, in response to a time shift function being continuously enabled, real-time broadcast data may occupy most of a storage space.

In response to a recording command being input when the time shift function is enabled, the controller 110 compares a residual capacity 520 with a size of a broadcast content to be recorded 530.

In response to the size of the content 530 being greater than the residual capacity 520, the controller 110 locally deletes broadcast data stored by the time shift function to secure a recording area in which a content 530 is to be recorded.

The earliest stored broadcast data is preferentially selected in a deletion area 540. Also, a size of the deletion area 540 may be pre-set by a user or may only be deleted when a capacity is obtained by excluding a size of the residual capacity 520 from the size of the content 530. Although the broadcast data stored by the time shift function is deleted, the controller 110 determines the size of the deletion area 540 to secure a minimum storage capacity.

For example, in response to the size of the content 530 to be recorded being 500 MB, and the size of the residual capacity 520 is 200 MB, a storage space of 300 MB is lacking in the size of content 530. Therefore, 300 MB of the earliest stored part of broadcast data 510 used for a time shift is deleted to secure a storage space.

According to another exemplary embodiment, in response to the controller 110 determining that the size of the residual capacity 520 is smaller than the size of the content 530 to be recorded, the controller 110 may delete only a size preset by the user, regardless of a size of the capacity that is lacking.

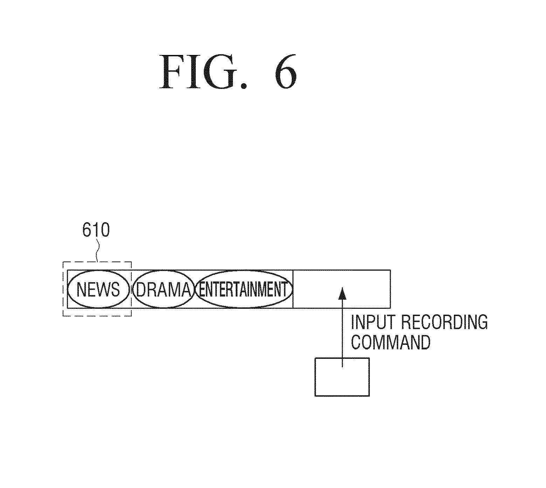

FIG. 6 is a view which illustrates a method of securing a storage space according to another exemplary embodiment.

A deletion area 610 may be selected in the unit of a program not in the unit of a size as described with reference to FIG. 5.

For example, in response to broadcast data being stored in order of news, drama, and entertainment programs by a time shift function, a whole portion of the broadcast data of the earliest stored news may be deleted in the unit of program in order to secure a storage space.

In response to a new content recording command being continuously input by a user, the controller 110 may sequentially delete broadcast data in the unit of a program in order to secure a storage space.

Alternatively, in response to the user displaying a user interface (UI) including information regarding a broadcast program stored by the time shift function on a screen to select a particular broadcast program, the controller 110 may delete the selected broadcast program to secure a storage space.

The controller 110 adjusts a size of the deletion area 610 to secure a minimum storage capacity allocated to the time shift function, as described above.

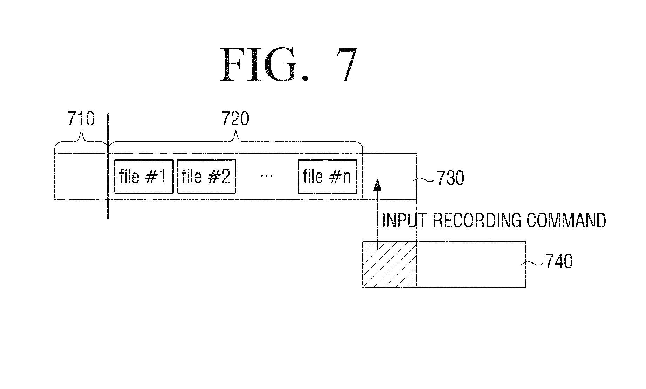

FIG. 7 is a view which illustrates a stoppage of a recording function due to a lack of available storage space, according to an exemplary embodiment.

In response to a recording command being input when an area of a whole storage space including identification numbers 710 and 720 is used as a time shift storage area, the controller 110 locally deletes the time shift storage area to secure a recording area.

For example, if files #1, #2, ..., and #n are sequentially recorded, the controller 110 locally and sequentially deletes the time shift storage area according to a size of a corresponding file or a size of a broadcast program stored in the time shift storage area. Therefore, a size of a capacity (710 + 720) used as the time shift storage area is sequentially reduced. If a size of the time shift storage area reaches a minimum storage capacity 710, the controller 110 stops deleting the time shift storage area.

In FIG. 7, the time shift storage area is reduced to the minimum storage capacity 710, residual areas 720 and 730 are used as recording areas, and a plurality of files #1, ..., and #n are stored in the recording areas.

In response to a recording command with respect to an additional content being input in this state, the controller 110 compares the residual capacity 730 of the recording areas with a size of a content 740 to be recorded. In response to the residual capacity 730 being small, according to the comparison result, the content 740 is stored into an available space, and recording with respect to a residual portion is stopped.

At least one or more of the stored files #1, ..., and #n may be deleted according to a user intention to increase available space in order to store the content 740.

For example, in response to a whole storage space being set to 500 MB, and a minimum storage capacity being set to 50 MB, a recording area is secured by a maximum of 450 MB capacity. If 200 MB of the recording area is used to record data, a total of 250 MB is an available space. If the content 740 is 700 MB in this state, only 250 MB which corresponds to the available space is stored, and recording of residual data is stopped. Also, real-time broadcast data is stored in a storage capacity of 50 MB according to an execution of a time shift function.

In response to all of a time shift storage area 710 being deleted to store a new content, the time shift function desired by the user may no longer be supported. Also, since the user arbitrarily deletes a pre-stored recording to record a new content according to user intension, recording of the new content 740 is stopped.

A size of a minimum storage capacity may be set by a manufacturer or by the user of a broadcast receiving apparatus or may be set in a time unit in addition to a memory capacity unit. Also, a storage area from among storage areas of the storage 140 having a particular memory address may be set to a minimum storage area used in order for the time shift function to be used.

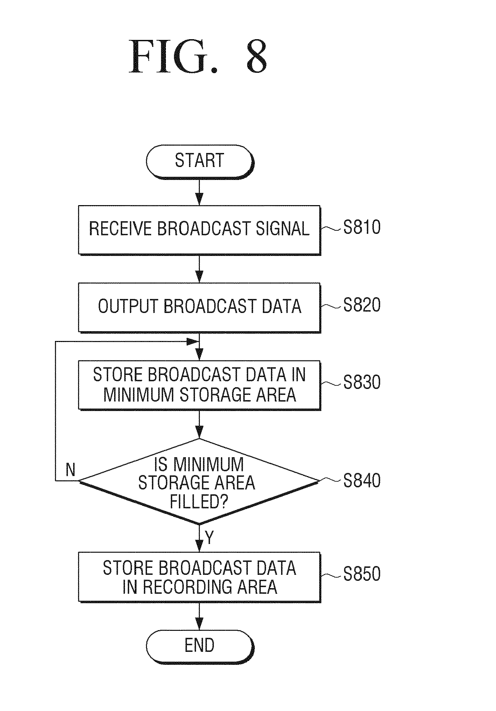

FIG. 8 is a flowchart which illustrates a method of executing a time shift function according to an exemplary embodiment.

Referring to FIG. 8, in operation S810, the receiver 120 receives a broadcast signal. In operation S820, the signal processor processes the received broadcast signal to output broadcast data in image and voice formats.

In response to the time shift function being enabled by a user, real-time broadcast data is stored in a time shift minimum storage area which is preset by the user, in operation S830.

Since the time shift minimum storage area is variable, the controller 110 determines whether the time shift minimum storage area is filled, in operation S840. In response to a determination in operation S840 that the time shift minimum storage area is filled, a part of a recording area is additionally designated as the time shift minimum storage area in order to store broadcast data in the corresponding area, in operation S850.

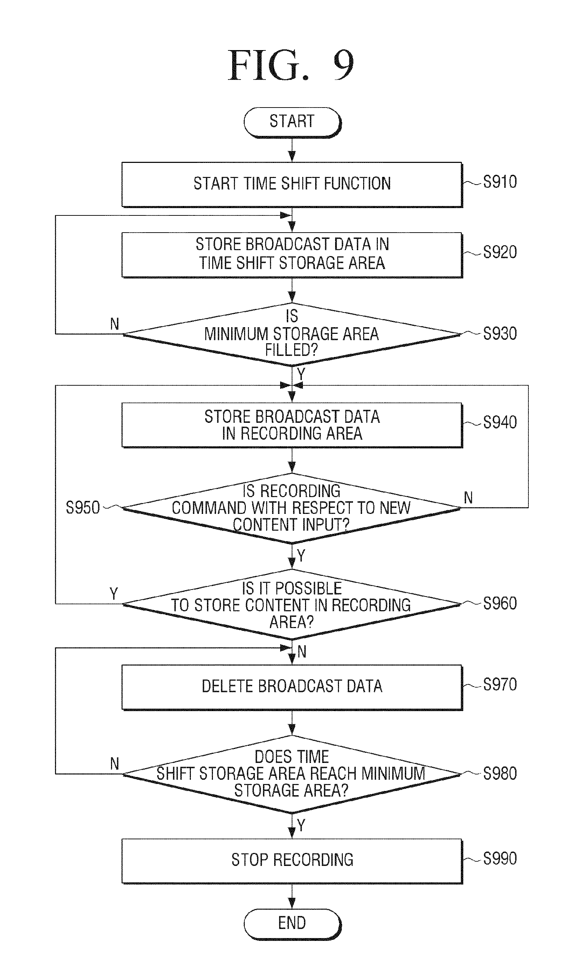

FIG. 9 is a flowchart which illustrates a method of securing a storage space to store a content if a recording command is input when a time shift function is enabled, according to an exemplary embodiment.

Referring to FIG. 9, in operation S910, the time shift function is enabled by a user. In operation S920, the controller 110 does not pre-secure a storage space used for a time shift but designates only a minimum storage area to store broadcast data in the minimum storage area. In operation S930, a determination is made as to whether the minimum storage area is filled. In response to a determination in operation S930 that the minimum storage area is filled, the controller 110 designates a part of a recording area as a time shift storage area to store broadcast data in the time shift storage area, in operation S940.

In operation S950, a determination is made as to whether a recording command is input with respect to a new content. In response to a determination in operation S950 that the recording command with respect to the new content is input, the controller 110 determines a residual capacity of a storage space to determine whether it is possible to store the new content in the residual space in operation S960. In response to the controller 110 comparing the residual capacity with a size of a broadcast content, and the residual capacity being greater than the size of the content, the controller 110 stores the content. In response to the residual capacity being smaller than the size of the content, the controller 110 locally deletes broadcast data to secure an available capacity in operation S970. Here, according to criteria for deleting broadcast data, the earliest stored broadcast data may be deleted in the time unit or in the program unit.

As a recording command with respect to a broadcast content is input, broadcast data stored in the time shift storage area is deleted to secure a storage space. In operation S980, a determination is made as to whether the time shift storage area reaches the minimum storage area. In response to a determination in operation S980 that the time shift storage area reaches the minimum storage area, deleting of the broadcast is stopped in operation S990. This is because if a broadcast content is stored in the time shift storage area, the time shift function may not be performed.

As described above, according to various exemplary embodiments, a storage capacity used for a time shift function may be adaptively managed. Therefore, a size of data viewable by the time shift function may extend up to a maximum storage capacity. Also, when a recording function is executed, the time shift function may be executed within a range in which recoding is not interrupted.

A method of managing a memory of a terminal according to the above-described various exemplary embodiments may be implemented as a program code and then stored on various types of non-transitory computer readable storage medium, to be provided to servers or apparatuses.

The non-transitory computer readable storage medium refers to a medium which does not store data for a short time such as a register, a cache memory, a memory, or the like but semi-permanently stores data and is readable by a device. In particular, the above-described applications or programs may be stored and provided on a non-transitory computer readable storage medium such as a CD, a DVD, a hard disk, a blue-ray disk, a universal serial bus (USB), a memory card, a ROM, or the like.

The foregoing exemplary embodiments and advantages are merely exemplary and are not to be construed as limiting. The present teachings can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A broadcast receiving apparatus comprising:
a receiver which receives a broadcast signal;
a signal processor which processes the broadcast signal and outputs broadcast data;
a storage which, if a time shift function is executed, stores the broadcast data; and
a controller which, if the size of a time shift capacity used for the time shift function exceeds a preset minimum storage capacity, performs the time shift function by using an additional storage capacity as the time shift capacity and, if a recording function is selected, fixes the size of the time shift capacity according to a residual capacity of the storage and the size of a content to be recorded.

2. The broadcast receiving apparatus of claim 1, wherein if the recording function is selected, the controller compares the size of the content to be recorded with the size of the residual capacity of the storage, if the size of the content is greater than the size of the residual capacity, locally deletes broadcast data stored by the time shift function and secures a recording area in which the content is to be recorded, and if the size of the content is smaller than the size of the residual capacity, fixes a residual storage capacity except for a storage capacity corresponding to the size of the residual capacity or the content as the time shift capacity.

3. The broadcast receiving apparatus of claim 2, wherein if the time shift capacity is filled when the time shift function is executed, the controller executes a recycling operation of deleting the broadcast data stored by the time shift function and storing new broadcast data in a space from which the broadcast data is deleted.

4. The broadcast receiving apparatus of claim 2 or 3, wherein if the size of the content to be recorded is greater than the size of the residual capacity, the controller locally deletes the broadcast data stored by the time shift function in a unit of preset time or in a unit of broadcast program.

5. The broadcast receiving apparatus of claim 4, wherein if the recording area is smaller than the size of the content to be recorded when the recording area is secured up to a residual storage capacity except the minimum storage capacity, the controller stops the recording function.

6. A method of executing a time shift function, the method comprising:
receiving a broadcast signal;
processing the broadcast signal and outputting broadcast data;
if the time shift function is executed, storing the broadcast data;
if the size of a time shift capacity used for the time shift function exceeds a preset minimum storage capacity, performing the time shift function by using an additional storage capacity as the time shift capacity; and
if a recording function is selected, adjusting the size of the time shift capacity according a residual capacity of a storage and the size of a content to be recorded.

7. The method of claim 6, further comprising:
if the recording function is executed, comparing the size of the content with the size of a residual capacity of a recording area;
if the size of the content is greater than the residual capacity, locally deleting broadcast data stored by the time shift function and securing the recording area in which the content is to be recorded; and
if the size of the content is smaller than the residual capacity, determining a residual storage capacity, except for a storage capacity corresponding to the residual capacity or the size of the content, as the time shift capacity.

8. The method of claim 7, further comprising:
if the time shift capacity is filled when the time shift function is executed, performing a recycling operation of deleting the broadcast data stored by the time shift function and storing new broadcast data in a storage space from which the broadcast data is deleted.

9. The method of claim 7 or 8, wherein the securing of the recording area in which the content is to be recorded comprises:
locally deleting the broadcast data stored by the time shift function in a unit of preset time or in a unit of broadcast program.

10. The method of claim 9, further comprising:
if the recording area is smaller than the size of the content when the recording area is secured up to a residual storage capacity, except for the minimum storage capacity, stopping the recording function.
